**Europäisches Patentamt**

**European Patent Office** (11) Numéro de publication: **0 022 686**

**Office européen des brevets** **A1**

(12) **DEMANDE DE BREVET EUROPEEN**

(21) Numéro de dépôt: **80400833.2** (51) Int. Cl.³: **F 24 J 3/02**

(22) Date de dépôt: **10.06.80**

(30) Priorité: **16.07.79 FR 7918336**
**31.03.80 FR 8007224**

(71) Demandeur: **COSMOS INVESTIGATIONS AND RESEARCH Société dite:, 24, rue Edouard Vaillant, F-92300 Levallois Perret (FR)**

(43) Date de publication de la demande: **21.01.81 Bulletin 81/3**

(72) Inventeur: **Leroy, Claude, 25 C, avenue Pasteur, F-13007 Marseille (FR)**

(74) Mandataire: **Maureau, Bernard et al, Cabinet Germain, Maureau et Millet Conseils en Brevets d'Invention 64, rue d'Amsterdam, F-75009 Paris (FR)**

(84) Etats contractants désignés: **AT BE CH DE GB IT LI LU NL SE**

(54) **Capteur solaire sphérique, à structure simplifiée.**

㊗ Ce capteur solaire comprend deux sphères concentriques, la sphère extérieure 1 étant translucide et la sphère intérieure 2 étant absorbante vis-à-vis du rayonnement solaire. Le fluide à chauffer est amené par un conduit d'entrée 7, sur lequel est intercalée une pompe 9, et pulvérisé par une tête 10 dans la chambre sphérique interne 8. Il s'écoule le long de la paroi interne de la sphère intérieure 2, en se réchauffant, et est recueilli à la base de cette sphère intérieure, par un conduit de sortie 11. Ce capteur s'applique notamment à la production d'eau chaude, par exemple pour le chauffage des piscines; placé au sommet d'un pied-support 6, il peut constituer en outre un candélabre.

ACTORUM AG

- 1 -

Capteur solaire sphérique, à structure simplifiée.

La présente invention se rapporte à un capteur solaire du type sphérique, présentant une structure relativement simplifiée.

Ce capteur solaire appartient au genre de ceux comprenant deux sphères concentriques, la sphère extérieure étant translucide et la sphère intérieure étant absorbante vis-à-vis du rayonnement solaire, ainsi que des conduits d'entrée et de sortie pour le fluide à chauffer.

On a déjà envisagé l'utilisation de tels capteurs pour la production d'eau chaude par "effet de serre", la forme sphérique permettant de produire de l'eau chaude avec un rendement qui n'est pas sensiblement modifié par la direction et l'angle d'incidence des rayons solaires. Dans ces capteurs, il convient de prévoir une circulation du fluide à chauffer, telle que le fluide se réchauffe au contact de la paroi de la sphère intérieure absorbante. Les projets actuellement connus prévoient, à cet effet, de faire passer le fluide à chauffer à travers un certain nombre de conduits et dans des chambres internes au capteur, notamment des chambres délimitées par deux parois sphériques ou hémisphériques concentriques. Il en résulte que la fabrication de tels capteurs solaires sphériques, reste, à l'heure actuelle, relativement complexe et coûteuse.

Pour éviter cet inconvénient, la présente invention fournit un capteur à structure simplifiée, donc économique, capable de produire de l'eau chaude avec un débit et une température suffisantes pour certaines applications, tel que, par exemple, le chauffage d'eau pour les piscines.

A cet effet, dans le capteur selon l'invention, le conduit d'entrée se prolonge vers le haut, à l'intérieur de la chambre sphérique interne du capteur, l'extrémité interne dudit conduit portant une tête de pulvérisation, apte à projeter le fluide sur la paroi interne de la sphère intérieure absorbante, de telle sorte que le fluide s'écoule en se réchauffant le long de cette paroi interne, avant d'être recueilli à la base de la sphère intérieure absorbante.

Le fluide, projeté par une sorte de gicleur sur la paroi interne de la sphère intérieure, récupère les calories solaires accumulées dans l'espace délimité par les deux sphères concentriques, en s'écoulant le long de cette paroi. Du fluide réchauffé est ainsi recueilli, par l'effet de la seule gravité, à la base de la sphère intérieure, et évacué par le conduit de sortie qui le dirige vers un lieu d'utilisation et/ou de stockage.

Avantageusement, le capteur objet de l'invention comprend un pied-support vertical traversé par le conduit d'entrée précité, dont l'extrémité interne porte la tête de pulvérisation, ainsi que par le conduit de sortie qui recueille le fluide chauffé à la base de la sphère intérieure absorbante.

Un tel capteur solaire sphérique, avec pied-support, peut donner lieu à une version perfectionnée, constituant aussi un candélabre et trouvant ainsi une utilité à la fois durant le jour et pendant les heures d'obscurité.

A cet effet, le volume délimité par la sphère extérieure translucide du capteur est divisé, par une paroi plane sensiblement horizontale, en deux moitiés dont celle supérieure comprend une demi-sphère intérieure absorbante qui, avec la paroi plane précitée, définit une chambre interne hémisphérique, dans laquelle est pulvérisé le fluide à chauffer, tandis que la moitié inférieure forme une autre chambre hémisphérique à l'intérieur de laquelle est disposée au moins une ampoule électrique, l'ensemble étant monté, à une certaine hauteur au-dessus du sol, au sommet du pied-support traversé par les conduits d'amenée et de retour du fluide à chauffer, ainsi que par les fils d'alimentation de l'ampoule, de manière à constituer un capteur solaire combiné à un candélabre.

La partie supérieure de cet appareil forme le capteur solaire proprement dit, en forme de demi-sphère, mais reprenant intégralement le principe de pulvérisation exposé précédemment. La partie inférieure constitue un moyen d'éclairage, la sphère extérieure translucide remplissant, au niveau de cette partie, le rôle d'un diffuseur de lumière. L'ensemble possède une forme de globe, permettant une bonne intégration notamment dans un environnement urbain. Le fait que seule la moitié inférieure de ce globe soit utilisée pour l'éclairage ne constitue en aucun cas une insuffisance, car la partie supérieure du diffuseur d'un candélabre émet habituellement, vers le ciel, une énergie lumineuse qui est gaspillée. Bien au contraire, la paroi plane séparatrice, située au-dessus de l'ampoule, peut être prévue réfléchissante, ce qui permet, dans le cas de la présente invention, de renvoyer vers le sol l'énergie lumineuse de l'ampoule qui, habituellement, est perdue dans l'atmosphère. Il devient donc possible de réduire la puissance de l'ampoule, d'où une économie d'énergie pour l'éclairage.

Un autre résultat remarquable procuré par cette forme de réalisation constituant aussi un candélabre, et apportant une économie d'énergie supplémentaire, consiste en la possibilité de récupérer la chaleur résiduelle de l'ampoule, pour chauffer le fluide durant la nuit. Pour récupérer cette énergie, il convient bien entendu de compléter les moyens de commande de l'installation, de manière à faire circuler aussi le fluide caloporteur durant
les heures de nuit, lorsque l'ampoule fournit une chaleur
utilisable. A cet effet, il est prévu par exemple un
thermostat différentiel supplémentaire avec une sonde de
température placée sous la paroi séparatrice qui surmonte
l'ampoule, pour commander la pompe de circulation du
fluide et chauffer ce dernier par récupération de la chaleur résiduelle de l'ampoule.

De toute façon l'invention sera mieux comprise à
l'aide de la description qui suit, en référence aux dessins
schématiques annexés représentant, à titre d'exemples non
limitatifs, deux formes de réalisation de ce capteur solaire sphérique :

Figure 1 est une vue en coupe verticale d'un premier capteur solaire conforme à l'invention ;

Figure 2 est une vue générale, en perspective, d'un
autre capteur solaire conforme à la présente invention,
constituant aussi un candélabre;

Figure 3 est une vue en coupe verticale, à plus
grande échelle, du capteur selon la figure 2.

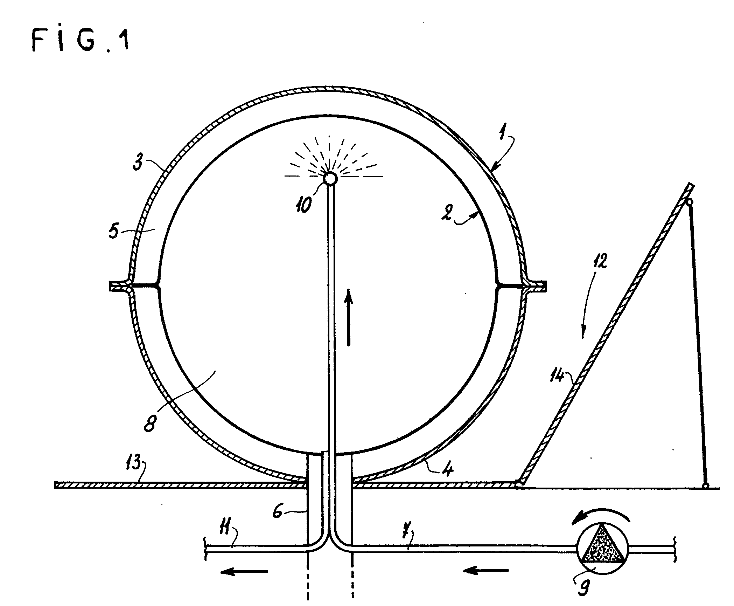

Le capteur solaire représenté à la figure 1 comprend deux sphères concentriques 1 et 2. La sphère extérieure 1 est formée par l'assemblage, suivant un plan de joint
horizontal, de deux demi-sphères 3 et 4 en matériau translucide, par exemple en matériau synthétique transparent
tel que polymétacrylate (connu sous la dénomination
commerciale de PLEXIGLAS). La sphère intérieure 2, séparée de la sphère extérieure 1 par un espace 5 rempli
d'air, peut être elle aussi formée par l'assemblage de
deux demi-sphères ; cette seconde sphère 2, devant
absorber le rayonnement solaire, est réalisée par exemple
en métal peint d'une couleur noir mat.

La sphère intérieure 2 est maintenue à l'intérieur
de la sphère extérieure 1 au moyen d'un pied-support
vertical 6, qui traverse la demi-sphère extérieure inférieure 4.

Un conduit d'entrée 7, amenant vers le capteur le fluide à chauffer, pénètre par le bas dans la chambre sphérique interne 8 du capteur, en passant à travers le pied-support 6. Sur le conduit 7 est intercalée une pompe 9, située à l'extérieur du capteur ; ce conduit 7 se prolonge verticalement, vers le haut, à l'intérieur de la chambre 8, et l'extrémité interne de ce conduit 7, située dans la région supérieure de la chambre 8, porte une tête de pulvérisation 10.

Un conduit de sortie 11, partant du point le plus bas de la chambre interne 8, sort enfin du capteur en traversant le pied-support 6.

Le fluide à chauffer, par exemple de l'eau, est pulvérisé dans la chambre interne 8. Il vient ainsi frapper la paroi interne de la sphère intérieure 2, et s'écoule le long de cette paroi ; ce faisant, le fluide récupère les calories emmagasinées dans l'espace 5 et par la sphère 2. Le fluide chauffé est recueilli, à la base de la sphère intérieure 2, par le conduit de sortie 11, qui le dirige vers un lieu d'utilisation ou de stockage.

A ce capteur est associé un réflecteur 12, constitué par deux surfaces planes réfléchissantes 13 et 14 qui forment un certain angle obtus l'une par rapport à l'autre. La surface réfléchissante 13 est disposée horizontalement, sur le sol, au-dessous du capteur. L'autre surface réfléchissante 14 est inclinée et tournée vers le Sud.

Le capteur solaire sphérique, à structure simplifiée, qui vient d'être décrit, est applicable à la production économique d'eau chaude, notamment pour le chauffage des piscines, et de façon générale à toutes les conversions thermo-solaires à basse température.

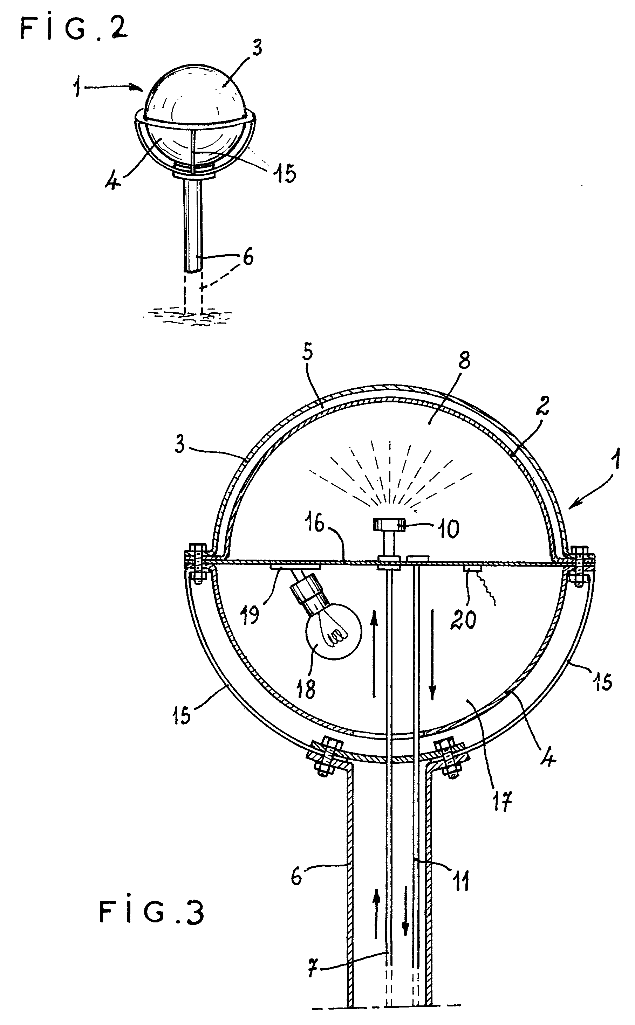

Les figures 2 et 3 correspondent à une application plus particulière, dans laquelle le capteur solaire constitue aussi un candélabre.

Comme le montre la figure 2, le capteur vu extérieurement comprend dans ce cas un pied-support vertical 6, au sommet duquel est monté un globe, dont la partie visible est la sphère extérieure 1, formée par l'assemblage, suivant un plan de joint horizontal, de deux demi-sphères 3 et 4 en matériau translucide, tel que métacrylate. Le globe formé de ces deux demi-sphères est supporté par des arceaux 15 à disposition extérieure.

La figure 3 montre la structure interne de ce capteur solaire combiné à un candélabre :

La moitié supérieure, séparée de la moitié inférieure par une paroi plane circulaire 16, constitue le capteur solaire proprement dit, et est réalisée selon la même conception que le capteur sphérique décrit en référence à la figure 1. Sous la demi-sphère extérieure 3 supérieure en matériau translucide, est prévue une demi-sphère intérieure 2, concentrique à la demi-sphère extérieure 3 et séparée de celle-ci par un espace 5 rempli d'air ; la demi-sphère intérieure 2, devant absorber le rayonnement solaire, est réalisée par exemple en métal peint d'une couleur noir mat.

La paroi 16 et la demi-sphère intérieure 2 délimitent une chambre interne hémisphérique 8, dans laquelle est pulvérisé le fluide à chauffer. Ce fluide est amené par un conduit 7 qui passe à travers le pied-support 6, traverse aussi verticalement la moitié inférieure de la sphère, ainsi que la paroi 16, et se prolonge verticalement vers le haut à l'intérieur de la chambre 8, pour se terminer par une tête de pulvérisation 10. Un conduit de sortie 11, partant du point le plus bas de la chambre 8, donc partant au niveau de la paroi 16, traverse lui-aussi, verticalement, la moitié inférieure de la sphère et le pied-support 6, pour recueillir le fluide chauffé et le diriger vers un lieu d'utilisation et/ou de stockage.

La demi-sphère extérieure 4 inférieure, en matériau translucide légèrement teinté en blanc, délimite, avec la paroi horizontale 16, une autre chambre hémisphérique 17, à l'intérieur de laquelle est disposée une ampoule électrique 18, tenue par exemple au moyen d'un support 19 fixé sous la paroi 16. L'alimentation électrique de l'ampoule 18 est réalisée par des fils non indiqués sur le dessin mais qui traversent, évidemment, le pied-support 6. Le matériau de la demi-sphère 4, sous laquelle est logée l'ampoule 18, est choisi avec une couleur et d'autres qualités qui en font un bon diffuseur de la lumière. De plus, la paroi 16, située au-dessus de l'ampoule 18, est rendue réfléchissante, ce qui permet de renvoyer vers le sol l'énergie lumineuse que l'ampoule émet vers le haut.

Il est possible également de récupérer la chaleur résiduelle de l'ampoule 18, pendant la nuit, pour chauffer le fluide caloporteur. A cet effet, un thermostat différentiel supplémentaire est prévu, pour commander la pompe de circulation du fluide caloporteur, non représentée, à partir d'une sonde de température 20 placée sous la paroi 16 qui surmonte l'ampoule 18 l'installation comprenant toujours, de manière habituelle, un thermostat différentiel principal qui commande l'apport d'eau chaude solaire dans le stock à chauffer, pendant le jour, à partir d'une sonde mesurant la température du stock. La commutation sur le thermostat "nuit" et le thermostat "jour" est faite automatiquement, au moyen d'une minuterie électrique. Si l'on considère, dans la quantité d'énergie totale dissipée par une ampoule électrique, la part de l'énergie diffusée sous forme lumineuse, en la comparant à la quantité d'énergie absorbée, on s'aperçoit de l'intérêt réel qu'il y aurait à récupérer, comme on vient de le décrire, la quantité d'énergie perdue sous forme de chaleur résiduelle par l'ampoule 18.

Le capteur solaire combiné à un candélabre, qui vient d'être décrit en référence aux figures 2 et 3, est applicable à l'éclairage de voies de circulation, de places, de terrains attenant à des immeubles ou à des locaux industriels, de parcs, de piscines (pour lesquelles il fournit aussi l'eau chaude), etc... Dans le cas d'une installation comprenant plusieurs capteurs similaires qui fonctionnent dans des conditions comparables, il est évident que les thermostats mentionnés plus haut peuvent être communs à toute l'installation.

Comme il va de soi, l'invention ne se limite pas

0022686

aux seules formes de réalisation de ce capteur solaire sphérique qui ont été décrites ci-dessus, à titre d'exemples ; elle en embrasse au contraire, toutes les variantes relevant du même principe.

REVENDICATIONS DE BREVET

1 - Capteur solaire sphérique, à structure simplifiée, comprenant deux sphères concentriques, la sphère extérieure (1) étant translucide et la sphère intérieure (2) étant absorbante vis-à-vis du rayonnement solaire, ainsi que des conduits d'entrée (7) et de sortie (11) pour le fluide à chauffer, caractérisé en ce que le conduit d'entrée (7) se prolonge vers le haut, à l'intérieur de la chambre sphérique interne (8) du capteur, l'extrémité interne dudit conduit (7) portant une tête de pulvérisation (10), apte à projeter le fluide sur la paroi interne de la sphère intérieure absorbante (2), de telle sorte que le fluide s'écoule en se réchauffant le long de cette paroi interne, avant d'être recueilli à la base de la sphère intérieure absorbante (2).

2 - Capteur solaire sphérique selon la revendication 1, caractérisé en ce qu'il comprend un pied-support vertical (6) traversé par le conduit d'entrée précité (7), dont l'extrémité interne porte la tête de pulvérisation (10), ainsi que par le conduit de sortie (11) qui recueille le fluide chauffé à la base de la sphère intérieure absorbante (2).

3 - Capteur solaire sphérique selon la revendication 2, caractérisé en ce que le volume délimité par la sphère extérieure translucide (1) est divisé, par une paroi plane (16) sensiblement horizontale, en deux moitiés dont celle supérieure comprend une demi-sphère intérieure absorbante (2) qui, avec la paroi plane précitée (16), définit une chambre interne hémisphérique (8), dans laquelle est pulvérisé le fluide à chauffer, tandis que la moitié inférieure forme une autre chambre hémisphérique (17) à l'intérieur de laquelle est disposée au moins une ampoule électrique (18), l'ensemble étant monté, à une certaine hauteur au-dessus du sol, au sommet du pied-support (6) traversé par les conduits (7,8) d'amenée et de retour du fluide à chauffer, ainsi que par les fils d'alimentation de l'ampoule (18), de manière à constituer un capteur solaire combiné à un candélabre.

4 - Capteur solaire sphérique combiné à un candélabre, selon la revendication 3, caractérisé en ce que la paroi plane séparatrice (16), située au-dessus de l'ampoule (18), est réfléchissante.

5 - Capteur solaire sphérique combiné à un candélabre, selon la revendication 3 ou 4, caractérisé en ce qu'il est prévu un thermostat différentiel, avec une sonde de température (20) placée sous la paroi séparatrice (16) qui surmonte l'ampoule (18), pour commander la pompe de circulation du fluide et chauffer ce dernier par récupération de la chaleur résiduelle de l'ampoule (18).

FIG.1

0022686

FIG.2

FIG.3

Office européen
des brevets

**RAPPORT DE RECHERCHE EUROPEENNE**

0022686

Numéro de la demande

EP 80 40 0833

## DOCUMENTS CONSIDERES COMME PERTINENTS

| Catégorie | Citation du document avec indication, en cas de besoin, des parties pertinentes | Revendication concernée |
|---|---|---|
| X | US - A - 4 137 903 (ANNETT) <br> * En entier * | 1,2 |
| | -- | |
| | US - A - 4 136 670 (DAVIS) <br> * En entier * | 3 |
| | -- | |
| A | FR - A - 2 280 857 (HOUPLAIN) | 3 |
| A | FR - A - 2 178 311 (SALMAND) | 1,3 |
| A | US - A - 4 056 093 (BARGER) | 1 |
| | ---- | |

**CLASSEMENT DE LA DEMANDE (Int. Cl. 3)**

F 24 J 3/02

**DOMAINES TECHNIQUES RECHERCHES (Int. Cl. 3)**

F 24 J
F 21 S

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 09-10-1980 | SMETS |

OEB Form 1503.1  06.78